Europäisches Patentamt

European Patent Office

Office européen des brevets

(19)

(11) Numéro de publication: **0 143 709**
**B1**

(12) **FASCICULE DE BREVET EUROPÉEN**

(45) Date de publication du fascicule du brevet:
12.08.87

(21) Numéro de dépôt: **84402374.7**

(22) Date de dépôt: **21.11.84**

(51) Int. Cl.⁴: **F 16 D 55/32,** F 16 D 55/224,
F 16 D 55/24, F 16 D 65/12

(54) Système de freinage comprenant au moins un disque de frein coulissant.

(30) Priorité: **30.11.83 FR 8319140**
**30.05.84 FR 8408544**

(43) Date de publication de la demande:
**05.06.85 Bulletin 85/23**

(45) Mention de la délivrance du brevet:
**12.08.87 Bulletin 87/33**

(84) Etats contractants désignés:
**DE GB IT NL SE**

(56) Documents cité:
**EP-A-0 040 049**
**DE-A-2 043 652**
**DE-A-2 165 817**
**FR-A-1 320 022**
**GB-A-1 201 438**
**US-A-1 328 491**
**US-A-2 608 275**
**US-A-2 985 259**

(73) Titulaire: **BENDIX France, 126, rue de Stalingrad,**
**F-93700 Drancy (FR)**

(72) Inventeur: **Mery, Jean- Claude, 61, rue Emile Zola,**
**F-93320 Pavillons- sous- Bois (FR)**
Inventeur: **Meynier, Guy, 58, rue de Reims, F-93600**
**Aulnay- sous- Bois (FR)**
Inventeur: **Thioux, Alain, 9, Allée des Bordes,**
**F-94430 Chennevieres (FR)**

(74) Mandataire: **Poidatz, Emmanuel, Service Brevets**
**Bendix 44 rue François 1er, F-75008 Paris (FR)**

## Description

L'invention a pour objet un système de freinage comprenant au moins un disque de freinage coulissant axialement sur un organe d'entraînement en rotation au travers de moyens de clavetage, notamment pour véhicule automobile.

L'invention concerne en particulier un système de freinage du type frein à disque dans lequel l'étrier comporte un moteur de frein susceptible de provoquer directement l'engagement de friction d'un élément de friction contre une première face d'un disque tournant et de provoquer indirectement l'engagement de friction d'un second élément de friction au travers du disque coulissant sur un organe d'entraînement en rotation.

On connaît du brevet US 2,985,259 un système de freinage du type défini ci-dessus dans lequel un étrier fixe reçoit en coulissement et en ancrage trois éléments de friction, entre lesquels sont interposés des disques coulissants sur un organe d'entraînement en rotation. Dans ce type de système de freinage, les disques coulissants doivent être capables de transmettre le couple de freinage à l'organe d'entraînement en rotation mais ne nécessite pas un guidage axial particulier du fait que les moteurs de frein sont circonférentiellement uniformément répartis et ne risquent pas de bloquer le coulissement du disque par arc-boutement sur les cannelures de guidage. Pour éviter l'arc-boutement dans ce système cannelé, il est connu d'allonger axialement les guidages tant sur la partie fixe que sur la partie coulissante, et plus ces guidages sont longs, moins il y a de chance de rencontrer un blocage du disque par arc-boutement. On réduit également les risques d'arc-boutement en lubrifiant les zones de coulissement. Néanmoins, plus les longueurs de guidage sont importantes, plus il est difficile d'assurer une lubrification correcte sur toute la longueur de la partie cannelée active, d'autant plus que le disque coulissant n'effectue sa course complète que pour une usure complète des éléments de friction. Il peut arriver que entre deux changements d'éléments de friction, le disque se bloque par manque de lubrification privant ainsi le véhicule de toute ou partie de son freinage.

L'invention a pour objet un système de freinage dans lequel de tels inconvénients sont évités.

Dans ce but, l'invention propose un système de freinage comprenant au moins un disque de freinage susceptible d'être freiné au moyen d'éléments de friction, ledit disque étant monté coulissant axialement sur un organe d'entraînement en rotation au travers de moyens de clavetage, caractérisé en ce que ledit système de freinage comporte un dispositif intégré de graissage forcé desdits moyens de clavetage, ce dispositif étant constitué par deux chambres étanches garnies d'un agent de lubrification et qui communiquent entre elles par les moyens de clavetage, ces chambres comprenant chacune une paroi mobile qui se déplace avec le disque pour faire varier en sens inverse le volume des deux chambres, de manière qu'un déplacement axial du disque provoque la circulation d'une partie de l'agent de lubrification dans les moyens de clavetage, de la chambre dont le volume diminue vers celle dont le volume augmente.

Il apparaît ainsi que, grâce à l'invention, les moyens de coulissement du disque sur l'organe d'entraînement seront lubrifiés de façon systématique, independamment de l'état d'usure des éléments de friction.

Un autre objet de l'invention consiste à utiliser le dispositif de graissage forcé pour rappeler le disque sur une certaine longueur prédéterminée après cessation de freinage et de maintenir le disque dans cette position, afin d'éviter des mouvements intempestifs de celui-ci.

Selon un autre objet de l'invention ledit organe d'entraînement est formé de deux parties associées en rotation et dont une des parties et ledit dispositif de graissage forcé forment un sous-ensemble démontable en bloc de la seconde partie. Ceci pour éviter d'une part les difficultés d'usinage des moyens de clavetage sur le moyeu de roue du véhicule, pour éviter tout risque de fragilisation de celui-ci et d'autre part, les difficultés de montage du moyeu coulissant et du dispositif intégré de graissage forcé lorsque ces opérations doivent être menées sur le moyeu de roue de véhicule à proximité de zones polluées du véhicule. En effet un mauvais montage ou l'introduction de polluants dans les moyens de clavetage peuvent bloquer le coulissement du disque et dégrader considérablemet l'efficacité du freinage du véhicule.

La création d'un sous-ensemble démontable en bloc permet de réaliser le montage des moyens de clavetage et du dispositif intégré de graissage forcé hors des zones polluées en un endroit où ce montage peut être réalisé facilement et sans risque, puis ce sous-ensemble sera assemblé sur le moyeu de roue, montage qui ne présentera aucune difficulté particulière.

On décrira maintenant, à titre d'exemple non limitatif, deux modes de réalisation préféré de l'invention, en se référant aux dessins annexés dans lesquels:

- la Figure 1 est une vue en bout d'un système de freinage selon l'invention;
- la Figure 2 est une vue de dessus du système de freinage de la Figure 1 dont certaines parties ont été représentées en coupe;
- la Figure 3 est une vue en coupe selon la ligne III-III du système de freinage représenté sur la Figure 1;
- la Figure 4 est une vue partielle agrandie du dispositif intégré de graissage forcé représenté sur la Figure 3;
- la Figure 5 est une coupe transversale du système de freinage selon un deuxième mode de réalisation.

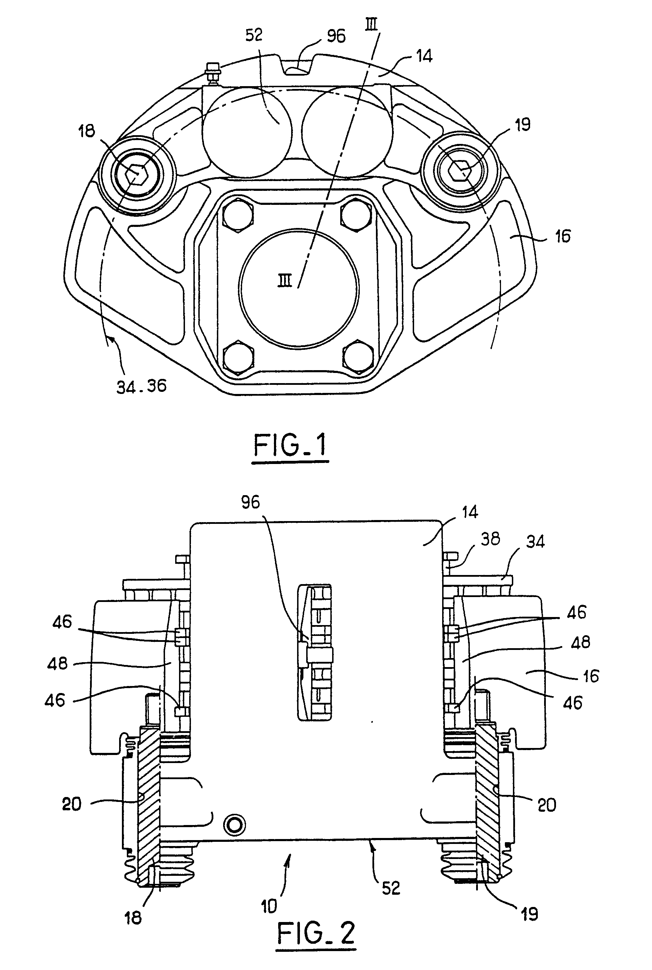

Le système de freinage représenté sur les Figures 1 à 3 comporte un frein à disque désigné dans son ensemble par la référénce 10 et un ensemble tournant désigné dans son ensemble par la référence 12. Le frein à disque 10 comporte de façon conventionnelle un étrier 14 monté coulissant sur un support fixe 16 au moyen de deux colonnettes axiales 18 et 19 fixées dans le support fixe 16 et passant par des alésages 20 formés dans l'étrier 14. De façon conventionnelle, le support fixe 16 est associé à une partie fixe du véhicule (non représentée).

L'ensemble tournant 12 est associé à une roue du véhicule (non représentée). Cet ensemble tournant 12 comporte un moyeu de roue 22 sur lequel est fixé, au moyen de vis 24, un disque de freinage fixe 34 d'une part, et d'autre part, un disque coulissant 26, 36 formé dans le mode de réalisation représenté par un moyeu coulissant 26 sur lequel est fixé un disque de freinage 36 au moyen de vis 37. Le moyeu coulissant 26 est solidaire en rotation du moyeu 22 grâce à des cannelures formées sur le moyeu 22 et pénétrant dans des rainures 32 formées dans le moyeu 26, le moyeu coulissant 26 étant susceptible de se déplacer axialement le long des cannelures 30. Dans le mode de réalisation représenté, le moyeu 22 est donc l'organe d'entraînement en rotation du disque 26, 36, les cannelures 30 et les rainures 32 formant les moyens de clavetage.

Le frein à disque comporte des éléments de friction placés entre les disques 34 et 36. Plus précisément, le frein à disque 10 comporte quatre éléments de friction, un premier élément de friction 38 fixé sur l'étrier 14 au moyen de vis 40; un deuxième et un troisième éléments de friction respectivement 42 et 44, placés dos à dos entre les disques 34 et 36 supportés par des oreilles 46 sur des surfaces de coulissement 48 formées sur le support fixe 16; enfin un quatrième élément de friction 50 placé entre le disque 36 et un moteur de frein 52 solidaire de l'étrier. L'élément de friction est également supporté par les surfaces de coulissement 48 du support fixe 16 au moyen d'oreilles 46 d'une façon similaire aux éléments de friction 42 et 44. Sur le mode de réalisation représenté, le moteur de frein 52 est double, chacune des moitiés comprenant un piston 54 monté coulissant dans un alésage 56 formé dans l'étrier 14, le piston 54 étant sensible à une pression régnant dans une chambre 58, susceptible d'être reliée à une source de pression hydraulique comme, par exemple, le maître-cylindre du véhicule (non représenté).

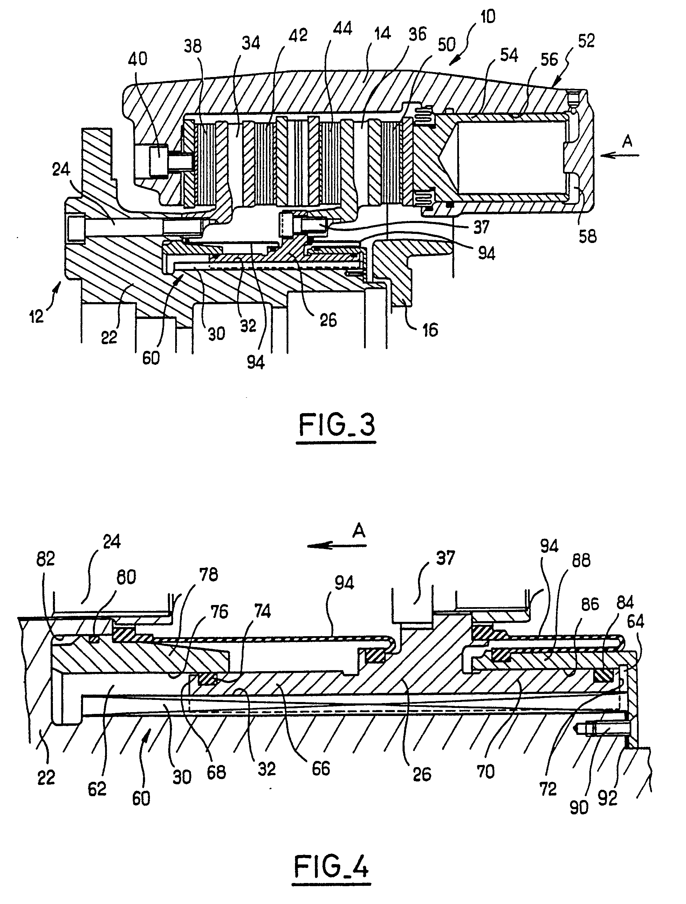

Selon l'invention, le système de freinage comporte un dispositif intégré de graissage forcé des moyens de clavetage désigné dans son ensemble par la référence 60, placé au niveau des moyens de clavetage. En se reportant à la Figure 4, où le dispositif intégré de graissage forcé 60 est représenté agrandi, on voit que celui-ci comporte deux chambres 62 et 64, placées de part et d'autre du moyeu 26 comportant, d'une part, un premier prolongement annulaire 66 dont l'extrémité axiale 68 forme une paroi mobile de la chambre 62 et d'autre part, un deuxième prolongement 70 dont l'extrémité axiale 72 forme une paroi mobile pour la chambre 64. Le prolongement annulaire 66 porte sur son diamètre extérieur un joint coulissant 74, qui coopère avec une portion cylindrique 76 formée sur une pièce 78, rapportée de façon étanche sur le moyeu 22 au moyen d'un joint fixe 80, la pièce 78 étant emmanchée à force dans un alésage 82 formé dans le moyeu 22. D'une façon similaire, le prolongement annulaire 70 porte un joint coulissant 84 sur son diamètre extérieur, ce joint coopérant avec une portion cylindrique 86 formée dans une autre pièce 88 solidaire du moyeu 22 grâce à des vis 90 uniformément réparties sur une circonférence. L'autre pièce 88 est également montée de façon étanche par rapport au moyeu 22 grâce à un joint fixe 92 placé entre l'autre pièce 88 et une portion d'extrémité du moyeu 22. Dans le mode de réalisation représenté, les diamètres des portions cylindriques 76 et 86 sont identiques, il en est de même des diamètres extérieurs des prolongements 66 et 70 et donc des joints 74 et 84.

Comme on le voit sur les Figures 3 et 4, des membranes de protection 94 ont été montées de part et d'autre du moyeu coulissant 26 entre ce dernier et le moyeu de roue 22.

Enfin, en se référant aux Figures 1 et 2, on voit qu'un ressort 96, placé sur l'étrier 14, sollicite radialement les éléments de friction 42, 44 et 50 en appui sur les surfaces de coulissement 48 portés par le support fixe 16.

Enfin, conformément à l'invention, les chambres annulaires 62 et 64 sont pourvues d'agents de lubrification, en l'occurence de la graisse dans le mode de réalisation représenté.

Le frein qui vient d'être décrit à l'aide des Figures 1 à 4, fonctionne de la façon suivante:.

Lorsque le liquide sous pression est admis dans la chambre 58, le piston 54 se déplace dans le sens de la flèche A de la Figure 3 par rapport à l'étrier 14. Le piston 54 applique l'élément de friction 50 sur le disque 36. Celui-ci sous la poussée du piston 54 se déplace également dans le sens de la flèche A et déplace les éléments de friction 44 et 42, également dans le sens de la flèche A, jusqu'à ce que l'élément de friction 42 vienne en appui sur le diaque 34 fixe. Par réaction l'étrier 14 se déplace dans le sens inverse de la flèche A et applique l'élément de friction 38 sur l'autre face du disque 34, l'étrier pouvant coulisser sur ses colonnettes 18 et 19. Le petit mouvement du disque coulissant, c'est à dire de l'ensemble coulissant moyeu 26 et disque 36, provoque bien entendu le déplacement des deux prolongements 66 et 70 du moyeu 26, et donc le déplacement des parois mobiles 68 et 72 des chambres 62 et 64. Ce déplacement des parois mobiles correspond à une diminution du volume de la chambre 62 et une augmentation du volume de la chambre 64. Comme les chambres 62 et 64 sont étanches grâce aux joints 80 et 74 d'une part, et 92 et 84 d'autre part, respectivement, la graisse contenue dans la chambre 62 est forcée entre les cannelures 30 et les rainures 32 asaurant ainai un graissage forcé des moyens de clavetage. Lors de ce déplacement du moyeu 26, les joints coulissants 74 et 84 se sont légèrement déformés du fait de leur frottement sur les portions cylindriques 76 et 86 et, lorsque le freinage est relâché, ces joints 74 et 84 tendent à faire revenir le moyeu 26 dans le sens contraire à la flèche A sur une longueur prédéterminée par leur géométrie comme cela est couramment utilisé sur les pistons de frein à disque. Ce mouvement de rappel provoque également une variation des volumes des chambres 62 et 64, mais dans le sens inverse de ce qui s'est passé précédemment, à savoir la chambre 64 diminue en volume et par conséquent de la graisse est repoussée au travers des cannelures et des rainures vers la chambre 62 assurant également un graissage forcé. On notera également que le frottement des joints 74 et 84 sur les portions cylindriques 76 et 86 évite les mouvements intempestifs de l'ensemble coulissant disque et moyeu 36 et 26.

En dehors de ces petits mouvements dus aux applications de freinage, la position du moyeu coulissant 26 par rapport au moyeu 22 évolue au fur et à mesure de l'usure des éléments de friction; à savoir la chambre 62 va diminuer au fur et à mesure de l'usure des garnitures, alors que la chambre 64 va augmenter. Ce mouvement de grande amplitude mais long dans le temps permet de transvaser pratiquement toute la graisse contenue dans la chambre 62 vers la chambre 64 et ainsi, le moyeu coulissant profitera dans le temps du renouvellement de la graisse contenue dans les cannelures et rainures. On constate donc que la graisse, après usure des éléments de friction, se trouvant dans la chambre 64, il est aisé de la remplacer ou de la compléter en démontant les vis 90 et la pièce 88. Il suffira alors de déplacer le disque 26, 36 dans le sens contraire à la flèche A pour transvaser cette graisse de la chambre 64 à la chambre 62, le dispositif intégré de graissage forcé étant alors en état d'être mis en oeuvre comme expliqué précédemment.

Le montage du système de freinage décrit précédemment s'effectue de la manière suivante:

Le véhicule est préalablement équipé du support fixe 16 monté sur une partie fixe du véhicule (non représentée). On procède alors au montage de la pièce 78 sur le moyeu 22 en prenant soin de monter le joint 80. On monte alors le disque 34 au moyen des vis 24 sur la moyeu 22. La chambre 62 est alors remplie de graisse et on monte sur les cannelures 30 le moyeu 26 préalablement équipé du disque 36 et des membranes 94. Dès que le joint 74 atteint la portion cylindrique 76, la chambre 62 est rendue étanche et toute progression du moyeu 26 dans le sens de la flèche A de la Figure 4 provoque un graissage forcé des cannelures et des rainures. Lorsque le moyeu 26 atteint la position représentée sur la Figure 4, on met en place l'autre pièce 88 en ayant soin d'intercaler le joint 92 et de serrer correctement les vis 90. Les deux soufflets 94 sont alors définitivement mis en place. L'ensemble tournant 12 peut alors être mis en place sur le véhicule, d'une façon conventionnelle, sur le porte-fusée (non représenté).

On procède alors au montage du frein. Les éléments de friction 42, 44 et 50 sont placés à proximité des disques 34 et 36 et prennent appui par leurs oreilles 46 sur les surfaces de coulissement 48 du support fixe 16. L'étrier 14 préalablement équipé de son moteur de frein 52 et de l'élément de friction 38 vissé sur cet étrier au moyen de vis 40 est alors présenté radialement de manière à chevaucher les disques 34 et 36. On procède alors au montage des colonnettes 18 et 19 en les faisant passer dans les alésages 20 de l'étrier 14, puis en les vissant dans le support fixe 16 par des filetages prévus à cet effet.

L'opération de démontage de freinage se fait dans l'ordre inverse des opérations qui viennent d'être décrites.

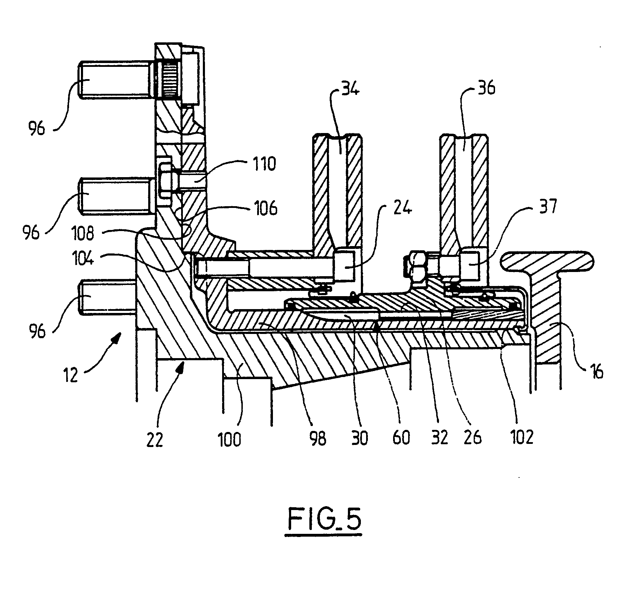

La Figure 5 représente en coupe transversale un deuxième mode de réalisation du système de freinage selon l'invention, sur lequel pour des raisons de clarté, le frein n'a pas été représenté. On se reportera avantageusement au premier mode de réalisation.

La Figure 5 représente un ensemble tournant désigné dans son ensemble par la référence 12, qui est normalement associée à une roue de véhicule (non représentée) au moyen de vis 96 réparties uniformément et circonférentiellement espacées. Cet ensemble tournant 12 comporte un moyeu 22 formé de deux parties, une première partie 98 qui porte le dispositif de graissage forcé 60 et une seconde partie 100 qui porte les vis 96. La première partie 98 reçoit au moyen de vis 24 un disque de freinage fixe 34 d'une part, et d'autre part un disque coulissant 26,36 formé dans le mode de réalisation représenté par un moyeu coulissant 26 sur lequel est fixé un disque de freinage 36 au moyen de vis 37. La seconde partie 100 comporte deux portions de centrage radial 102 et 104 sur lesquels viennent des surfaces cylindriques correspondantes formées sur la première partie 98, assurant un centrage relatif entre les première et seconde parties. Les deux parties 98 et 100 comportent deux faces frontales 106 et 108 respectivement et plaquées l'une sur l'autre au moyen de vis 110 qui permettent d'une part la fixation de la première partie 98 sur la deuxième partie 100 et assurent l'entraînement de la pièce 98 par la pièce 100. Il est à noter, que l'entraînement se fait essentiellement par la friction entre les pièces 98 et 100, dû au serrage des vis 110, vis uniformément réparties sur une circonférence permettant d'assurer un plaquage uniforme des deux faces. Les faces 106, 108 et les vis 110 forment les moyens de fixation des deux pièces 98 et 100.

Le fonctionnement du système de freinage selon le deuxième mode de réalisation étant similaire à celui du premier mode ne sera pas décrit davantage.

De la description qui précède, on voit que la première partie 98 équipée du dispositif de graissage forcé 60 comprenant entre autres le moyeu coulissant 26, peut être démonté de la seconde partie 100 en dévissant les vis 110 sans aucune intervention au niveau du clavetage 30, 32 ce qui permet de prendre toutes les précautions voulues pour l'assemblage de ce clavetage ou du dispositif de graissage forcé.

Il est bien évident que l'invention n'est pas limitée aux modes de réalisation représentés, en particulier les chambres 62 et 64 peuvent être remplies de lubrifiant liquide, il sera alors prévu sur l'autre pièce 88 des moyens de remplissage correspondants. De même, il peut être prévu que les diamètres des portions cylindriques 76 et 86 ne sont pas les mêmes diamètres pour profiter d'une variation de volume de l'ensemble des chambres 62, 64 et obtenir un graissage forcé assisté par l'effet différentiel des pressions engendrées de part et d'autre du moyeu coulissant 26. On peut également prévoir que la pièce 78 soit monobloc avec le moyeu 22 ou que la fonction du joint 80 soit reprise par le bourrelet de la membrane 94 qui lui est adjacente. Enfin, d'autres modifications peuvent être prévues sans sortir pour cela du cadre de l'invention.

**Revendications**

1. Système de freinage comprenant au moins un disque de freinage (26,36) susceptible d'être freiné au moyen d'éléments de friction (44,50), ledit disque étant monté coulissant axialement sur un organe d'entraînement en rotation (22) au travers de moyens de clavetage (30,32), caractérisé en ce que ledit système de freinage comporte un dispositif intégré de graissage forcé (60) desdits moyens de clavetage (30,32), ce dispositif (60) étant constitué par deux chambres étanches (62,64) garnies d'un agent de lubrification et qui communiquent entre elles par les moyens de clavetage (30, 32), ces chambres (62,64) comprenant respectivement des parois mobiles (68,72) qui se déplacent avec le disque (26,36) pour faire varier en sens inverse le volume des deux chambres de manière qu'un déplacement axial du disque provoque la circulation d'une partie de l'agent de lubrification dans les moyens de clavetage (30,32), de la chambre dont le volume diminue vers celle dont le volume augmente.

2. Système de freinage selon la revendication 1, caractérisé en ce que les parois mobiles (68,72) sont formées par des prolongements axiaux annulaires (66,70) formés de part et d'autre dudit disque (26,36).

3. Système de freinage selon la revendication 1 ou la revendication 2, caractérisé en ce que la somme des volumes des deux chambres (62,64) est constante pour toute position des parois mobiles (68,72).

4. Système de freinage selon la revendication 2 ou la revendication 3, caractérisé en ce que lesdits prolongements (66,70) sont équipés de joints coulissants (74,84) coopérant avec des portions cylindriques (76,86) solidaires dudit organe d'entraînement (22).

5. Système de freinage selon la revendication 4, caractérisé en ce que lesdits joints coulissants (74,84) forment un dispositif de rappel, sur une longueur prédéterminée, dudit disque (26,36) et de maintien de celui-ci après cessation de l'action des éléments de friction (44,50).

6. Système de freinage selon la revendication 4 ou la revendication 5, caractérisé en ce que lesdites portions cylindriques (67-78,86-88) sont rapportées de façon étanche (80,92) sur ledit organe d'entraînement (22).

7. Système de freinage selon la revendication 6, caractérisé en ce que l'une (86-88) desdites portions (76-78,86-88) est amovible et permet de remplacer ou de compléter l'agent de lubrification.

8. Système de freinage selon l'une des revendications 1 à 5, caractérisé en ce que ledit organe d'entraînement (22) est formé de deux parties (98,100) associées en rotation et dont une (98) des parties et ledit dispositif de graissange forcé (60) forment un sous-ensemble démontable en bloc de la seconde (100) partie.

9. Système de freinage selon la revendication 8 caractérisé en ce que les moyens de clavetage (30,32) restent protégés après démontage dudit sous-ensemble.

10. Système de freinage selon la revendication 9, caractérisé en ce que ladite seconde partie (100) comporte des portions de centrage radial (102,104) de ladite première partie (98) et en ce que des moyens de fixation (106,108,110) sont prévus entre lesdites deux parties (98,100) assurant la fixation et l'entraînement en rotation de ladite première partie (98) par ladite seconde partie (100).

11. Système de freinage selon la revendication 10, caractérisé en ce que les moyens de fixation (106,108,110) comprennent deux faces frontales (106,108) formées sur chacune des parties (98,100) et plaquées l'une sur l'autre par des moyens filetés (110).

12. Système de freinage selon l'une des revendications 1 à 11, caractérisé en ce que l'agent de lubrification est de la graisse.

**Patentansprüche**

1. Bremsanlage mit mindestens einer Bremsscheibe (26,36), die mittels Bremsbacken (44,50) abbremsbar ist, wobei die Bremsscheibe mittels einer Keilverzahnung (30,32) axial gleitend und drehfest an einem Antriebskörper (22) angebracht ist, dadurch gekennzeichnet, daß die Bremsanlage eine integrierte Schmiervorrichtung (60) zur Zwangsschmierung der Keilverzahnung (30,32) aufweist, wobei die Schmiervorrichtung (60) von zwei abgedichteten Kammern (62,64) gebildet wird, die mit einem Schmiermittel versehen sind und untereinander über die Keilverzahnung (30,32) in Verbindung stehen, wobei diese Kammern (62,64) jeweils bewegliche Wände (68,72) aufweisen, die sich mit der Bremsscheibe (26,36) verschieben, um das Volumen der beiden Kammern im umgekehrten Sinn so zu verändern, daß eine axiale Verschiebung der Bremsscheibe den Umlauf eines Teils des Schmiermittels in der Keilverzahnung (30,32) hervorruft, und zwar aus der Kammer, deren Volumen kleiner wird, in die Kammer, deren Volumen größer wird.

2. Bremsanlage nach Anspruch 1, dadurch gekennzeichnet, daß die beweglichen Wände (68,72) von ringförmigen axialen Verlängerungen (66,70) gebildet werden, die beidseitig zu der Bremsscheibe (26,36) gebildet sind.

3. Bremsanlage nach Anspruch 1 oder 2, dadurch gekennzeichnet, daß die Summe der Volumen der beiden Kammern (62,64) für jede Stellung der beweglichen Wände (68,72) konstant ist.

4. Bremsanlage nach Anspruch 2 oder 3, dadurch gekennzeichnet, daß die Verlängerungen (66,70) mit Gleitdichtungen (74,84) versehen sind, die mit zylindrischen Teilen (76,86) zusammenwirken, welche mit dem Antriebskörper (22) fest verbunden

5. Bremsanlage nach Anspruch 4, dadurch gekennzeichnet, daß der Gleitdichtungen (74,84) eine Vorrichtung zum Rückholen der Bremsscheibe (26,36) auf einer vorgegebenen Länge und zum Halten derselben nach Beendigung der Tätigkeit der Bremsbacken (44,50) bilden.

6. Bremsanlage nach Anspruch 4 oder 5, dadurch gekennzeichnet, daß die zylindrischen Teile (67-78,86-88) abgedichtet (80, 92) auf dem Antriebskörper (22) angeordnet sind.

7. Bremsanlage nach Anspruch 6, dadurch gekennzeichnet, daß einer (86-88) dieser Teile (76-78,86-88) entfernbar ist und das Auswechseln oder Auffüllen des Schmiermittels erlaubt.

8. Bremsanlage nach einem der Ansprüche 1-5, dadurch gekennzeichnet, daß der Antriebskörper (22) aus zwei drehungsmäßig einander zugeordneten Teilen (98,100) besteht, von denen der eine Teil (98) und die Schmiervorrichtung (60) eine Baueinheit bilden, die als Block von dem zweiten Teil (100) abnehmbar ist.

9. Bremsanlage nach Anspruch 8, dadurch gekennzeichnet, daß die Keilverzahnung (30,32) nach der Abnahme dieser Baueinheit geschützt bleibt.

10. Bremsanlage nach Anspruch 9, dadurch gekennzeichnet, daß der zweite Teil (100) Abschnitte (102,104) zur radialen Zentrierung des ersten Teils (98) aufweist und daß zwischen den beiden Teilen (98,100) Befestigungsmittel (106,108,110) vorgesehen sind, die die Befestigung und den Drehantrieb des ersten Teils (98) durch den zweiten Teil (100) sicherstellen.

11. Bremsanlage nach Anspruch 10, dadurch gekennzeichnet, daß die Befestigungsmittel (106,108,110) zwei Stirnflächen (106, 108) aufweisen, die an jedem der Teile (98,100) gebildet sind und durch Schraubmittel (110) gegeneinandergedrückt werden.

12. Bremsanlage nach einem der Ansprüche 1-11, dadurch gekennzeichnet, daß das Schmiermittel ein Schmierfett ist.

**Claims**

1. Brake system comprising at least one brake disc (26,36) adapted to be braked by means of friction members (44,55), said disc being axially slidingly mounted on a rotary drive member (22) via spline means (30,32), characterized in that said brake system comprises an integrated device (60) for positive lubrication of said spline means (30,32), said device (60) being comprised of two sealed chambers (62,64) containing a lubrication agent and communicating with each other by the spline means (30,32), said chambers (62,64) comprising, respectively, movable walls (68,72) which are displaced with the disc (26,36) for making the volumes of the two chambers vary in opposite senses such that an axial displacement of the disc causes circulation of a portion of the lubricating agent in the spline means (30, 32) from the chamber whose volume diminishes towards the chamber whose volume increases.

2. Brake system according to claim 1, characterized in that the movable walls (68,72) are formed by annular axial extensions (66,70) formed on either side of said disc (26,36).

3. Brake system according to claim 1 or claim 2, characterized in that the sum of volumes of the two chambers (62,64) is constant for all positions of the movable walls (68,72).

4. Brake system according to claim 2 or claim 3, characterized in that said extensions (66,70) are provided with sliding seals (74,84) cooperating with cylindrical portions (76,86) fixed to said drive member (22).

5. Brake system according to claim 4, characterized in that said sliding seals (74,84) form a device for returning said disc (26,36) along a predetermined length and for maintaining the latter after termination of the action of the friction members (44,50).

6. Brake system according to claim 4 or claim 5, characterized in that said cylindrical portions (67-78,86-88) are disposed in sealed manner (80,92) on said drive member (22).

7. Brake system according to claim 6, characterized in that one (86-88) of said portions (76-78,86-88) is removable and allows to replace or to refill the lubricating agent.

8. Brake system as in any of claims 1 to 5, characterized in that said drive members (22) are formed by two portions (98,100) associated for rotation, one (98) of the portion and said lubrication device (60) forming a subassembly adapted to be dismounted as a unit from the second (100) portion.

9. Brake system according to claim 8, characterized in that the spline means (30,32) remain protected after dismounting of said subassembly.

10. Brake system according to claim 9, characterized in that said second portion (100) comprises parts for radial centering (102,104) of said first portion (98), and in that said fixing means (106,108,110) are provided between said two portions (98,100) assuring the fixing and rotary drive of said first portion (98) by said second portion (100).

11. Brake system according to claim 10, characterized in that the fixing means (106,108,110) comprise two front faces (106,108) formed on each of the portions (98,100) and urged one against the other by threaded means (110).

12. Brake system according to any of claims 1 to 11, characterized in that the lubricating agent is grease.

FIG_1

FIG_2

1

FIG_3

FIG_4

FIG_5